# EUROPEAN PATENT SPECIFICATION

(11) **EP 4 501 688 B1**
(45) Date of publication and mention of the grant of the patent: **16.09.2026**
(21) Application number: 24192646.8
(22) Date of filing: 02.08.2024
(51) Int. Cl.: B60L 15/00, B60L 15/20, B60L 50/51, H02P 27/06, H02P 27/08, H02P 5/74

(54) **MOTOR CONTROLLER, ELECTRIC VEHICLE, AND CONTROL METHOD FOR ELECTRIC VEHICLE**
MOTORSTEUEREINHEIT, ELEKTROFAHRZEUG UND STEUERUNGSVERFAHREN FÜR ELEKTROFAHRZEUG
CONTRÔLEUR DE MOTEUR, VÉHICULE ÉLECTRIQUE ET PROCÉDÉ DE CONTRÔLE DE VÉHICULE ÉLECTRIQUE

(30) Priority: 03.08.2023 CN 202310973755
(43) Date of publication of application: 05.02.2025
(73) Proprietor: Huawei Digital Power Technologies Co., Ltd., Shenzhen, 518043 (CN)
(72) Inventor: Yang, Lizhou, Shenzhen, 518043 (CN); Li, Wenda, Shenzhen, 518043 (CN); Tang, Jie, Shenzhen, 518043 (CN)
(74) Representative: Isarpatent

(56) References cited:
- CN-A- 115 339 329
- JP-B2- 5 288 178
- US-A1- 2007 241 719
- US-B2- 10 967 743
- US-B2- 8 441 225

## Description

### TECHNICAL FIELD

This application relates to the field of electric vehicle power systems, and in particular, to a motor controller, an electric vehicle, and a control method for an electric vehicle.

### BACKGROUND

With development of new energy technologies, electric vehicles are more widely used. An electric vehicle generally controls torque of a drive motor by using a motor controller. When a speed of the electric vehicle is high and an output voltage of a battery is low, a torque output of the drive motor is insufficient and inefficient. Generally, a bidirectional DC-DC conversion circuit is used to increase a bus voltage of the motor controller, to enhance a torque output capability of the drive motor and improve working efficiency of the drive motor. In a scenario of braking of the electric vehicle, the bidirectional DC-DC conversion circuit further needs to decrease the bus voltage of the motor controller, to cooperate with energy recovery of the drive motor. However, the bidirectional DC-DC conversion circuit increases costs and a volume of a power system of the electric vehicle, and causes a heat generation problem.
US 2007/0241719 A1 describes an electric power system that comprises an AC motor, a first DC voltage unit, an inverter as a power converter, being connected between the AC motor and first DC voltage unit, for exchanging power between these two components; and a controlled DC power supply which is connected between an arbitrary spot of a coil of the AC motor and a positive or negative electrode of the first DC voltage unit and which connects at least one semiconductor switching element and a battery as a second DC voltage unit in series.
CN 115 339 329 A describes a power assembly, a control method and a hybrid electric vehicle, the power assembly comprises a motor control unit and a motor, the motor control unit comprises N bridge arms, the motor comprises N motor windings corresponding to the N bridge arms, and N is greater than or equal to 2; each bridge arm in the N bridge arms comprises a first end and a second end, the first end of each bridge arm is connected with a positive bus, the second end of each bridge arm is connected with a negative bus, and the midpoint of each bridge arm is connected with one end of a motor winding; the other end of each motor winding in the N motor windings is connected with one end of the power battery, and the other end of the power battery is connected with the positive bus or the negative bus. US 10 967 743 B2 describes a powertrain for a vehicle includes an electric machine coupled with a first inverter, a traction battery and a second inverter. The traction battery is coupled between a neutral terminal of the electric machine and a negative terminal of the first inverter. The second inverter is coupled in parallel with the first inverter with respect to a direct current (DC) bus, and configured to drive a second electric machine.
JP 5 288178 B2 relates to a motor drive system comprising a plurality of motor drive devices, each including a power converter connected to an energy storage element on the DC side. A motor is driven by AC power output from the power converter, with a battery connected between the neutral point of the stator winding and one DC bus of the power converter. Another power converter, also connected to an energy storage element on the DC side and an AC power supply on the AC side, drives another motor via a disconnecting means. The system enables charging of the battery without using a dedicated charging device, by controlling the power converters and utilizing the stator windings as reactors. During charging, DC current is supplied to the stator winding without generating torque, thereby preventing unintended movement of the vehicle.

### SUMMARY

An object of the invention is to provide a motor controller, an electric vehicle, and a control method for an electric vehicle, to resolve a problem that an electric vehicle has an insufficient endurance capability and low energy utilization efficiency. This object is solved by the subject-matter of the appended independent claims, wherein further embodiments are set out in the dependent claims.

According to a first aspect, this application provides a motor controller for an electric vehicle. The motor controller includes a control circuit and an inverter circuit. The inverter circuit includes a plurality of switching transistor bridge arms, and each switching transistor bridge arm includes an upper bridge arm switching transistor and a lower bridge arm switching transistor. Bridge arm midpoints of the plurality of switching transistor bridge arms are configured to connect to a multiphase winding of a drive motor, one end of each switching transistor bridge arm is configured to connect to one end of a bus capacitor, the other end of each switching transistor bridge arm is configured to connect to the other end of the bus capacitor, the one end of each switching transistor bridge arm is configured to connect to one end of a power battery, and a center tap of the multiphase winding is configured to connect to the other end of the power battery by using a switch module. The control circuit is configured to: in response to that an output voltage of the power battery is less than a preset voltage value and the drive motor does not output torque, control the inverter circuit to increase a voltage at both ends of the bus capacitor.

In a discharge process of the power battery, the output voltage of the power battery decreases as a quantity of electricity of the power battery decreases. When a remaining quantity of electricity of the power battery is small, the output voltage of the power battery decreases, and therefore it is difficult for the drive motor to run at a high working voltage, thereby reducing output power and working efficiency of the drive motor. To improve power performance of the electric vehicle, currently, two powertrains are disposed in the electric vehicle to jointly drive the electric vehicle. One of the powertrains includes a motor controller and a drive motor, and the other powertrain includes another motor controller and another drive motor. The motor controller provided in this application is one of the two motor controllers of the electric vehicle. The motor controller provided in this application is configured to: when the output voltage of the power battery is low and a drive motor connected to the motor controller does not output torque and rotates with wheels, increase the voltage at both ends of the bus capacitor, so that another drive motor that outputs torque in the electric vehicle runs at a high working voltage, thereby improving running efficiency and power output of the drive motor.

The drive motor is configured to drive a pair of wheels connected to the electric vehicle, and in a process in which the drive motor rotates with the pair of wheels, the control circuit is configured to: in response to that the output voltage of the power battery is less than the preset voltage value, control a lower bridge arm switching transistor of at least one switching transistor bridge arm to be turned on at a preset duty cycle in each switching cycle.

The control circuit provided in this application controls the lower bridge arm switching transistor of the at least one switching transistor bridge arm to be turned on at the preset duty cycle in each switching cycle, so that the bridge arms of the inverter circuit of the motor controller and the winding of the drive motor form a boost (boost) circuit, thereby increasing the voltage at both ends of the bus capacitor. In each switching cycle, when the lower bridge arm switching transistor of the at least one switching transistor bridge arm is turned on, a current flowing from a positive electrode of the power battery sequentially passes through the winding of the drive motor and the lower bridge arm switching transistor that is in a turned-on state, and finally flows back to a negative electrode of the power battery. In this process, the power battery is configured to charge an inductor of a three-phase winding of the drive motor. When the lower bridge arm switching transistor of the at least one switching transistor bridge arm is turned off, the power battery and the charged winding of the drive motor are jointly configured to charge the bus capacitor, to increase the voltage at both ends of the bus capacitor, so that the drive motor outputs higher power and runs in a more highly efficient range.

Alternatively, in the process in which the drive motor rotates with the pair of wheels, the control circuit is configured to: in response to that the output voltage of the power battery is less than the preset voltage value, control an upper bridge arm switching transistor and a lower bridge arm switching transistor of at least one switching transistor bridge arm to be alternately turned on.

The motor controller provided in this application may alternatively control the lower bridge arm switching transistor and the upper bridge arm switching transistor of the at least one bridge arm to be alternately turned on, so that the inverter circuit of the motor controller and the winding of the drive motor form a boost (boost) circuit, thereby increasing the voltage at both ends of the bus capacitor.

In an implementation of the first aspect, the electric vehicle includes another drive motor, the another drive motor is configured to be in transmission connection with another pair of wheels of the electric vehicle, and in a process in which the another drive motor rotates with the another pair of wheels to generate an induced current, the control circuit is configured to: in response to that the another drive motor outputs an alternating current and the voltage at both ends of the bus capacitor is greater than a preset voltage value, control the inverter circuit to decrease the voltage at both ends of the bus capacitor.

In a braking process of the electric vehicle, the another drive motor runs in an electric power generation state to convert kinetic energy of the electric vehicle into a high-voltage alternating current, and another motor controller converts the high-voltage alternating current into a direct current to charge the power battery. When a voltage of the direct current output by the another motor controller is high, the motor controller provided in this application decreases the voltage at both ends of the bus capacitor, so that the direct current output by the motor controller can charge the power battery. The motor controller provided in this application can improve charging efficiency of the power battery in an energy recovery process of the electric vehicle.

In an implementation of the first aspect, in the process in which the another drive motor rotates with the another pair of wheels to generate the induced current, the control circuit is configured to: when the motor controller gives response to that the voltage at both ends of the bus capacitor is greater than the preset voltage value, control an upper bridge arm switching transistor of at least one switching transistor bridge arm to be turned on at a preset duty cycle in each switching cycle.

The control circuit provided in this application controls the upper bridge arm switching transistor of the at least one switching transistor bridge arm to be turned on at the preset duty cycle in each switching cycle, so that the bridge arms of the inverter circuit of the motor controller and the winding of the drive motor form a buck circuit, thereby decreasing the voltage at both ends of the bus capacitor.

In an implementation of the first aspect, in the process in which the another drive motor rotates with the another pair of wheels to generate the induced current, the control circuit is configured to: in response to that the voltage at both ends of the bus capacitor is greater than the preset voltage value, control an upper bridge arm switching transistor and a lower bridge arm switching transistor of at least one switching transistor bridge arm to be alternately turned on.

The control circuit provided in this application controls the upper bridge arm switching transistor and the lower bridge arm switching transistor of the at least one switching transistor bridge arm to be alternately turned on, so that the winding of the drive motor of the motor controller forms a buck circuit, thereby decreasing the voltage at both ends of the bus capacitor.

In an implementation of the first aspect, the control circuit is configured to: in response to a first torque signal, control the switch module to connect one end of the power battery to one end of the plurality of switching transistor bridge arms, and control the plurality of bridge arm midpoints of the inverter circuit to output an alternating current, to drive the drive motor to output torque, where a torque value indicated by the first torque signal is greater than a preset torque value.

When the electric vehicle requires the drive motor to output torque, the control circuit receives the first torque signal and controls the drive motor to output the torque value indicated by the torque signal.

In an implementation of the first aspect, the control circuit is configured to: in response to a second torque signal, control the switch module to connect one end of the power battery to one end of the plurality of switching transistor bridge arms, and control the upper bridge arm switching transistors and the lower bridge arm switching transistors of the plurality of switching transistor bridge arms to be turned off, where a torque value indicated by the second torque signal is less than the preset torque value.

When neither the drive motor needs to output torque nor a bus voltage needs to be adjusted, the switching transistors of the motor controller are turned off to save energy.

According to a second aspect, this application provides a powertrain. The powertrain includes the motor controller according to the first aspect and a drive motor, where the drive motor is an induction motor.

Beneficial effects of the powertrain provided in this application are similar to beneficial effects of the motor controller according to the first aspect. Details are not described herein.

According to a third aspect, this application provides an electric vehicle. The electric vehicle includes the motor controller according to the first aspect or the powertrain according to the second aspect.

Beneficial effects of the electric vehicle provided in this application are similar to the beneficial effects of the motor controller according to the first aspect or the beneficial effects of the powertrain according to the second aspect. Details are not described herein.

According to a fourth aspect, this application provides a control method for an electric vehicle. The electric vehicle includes a motor controller, a drive motor, and a switch module. The drive motor includes a multiphase winding, and the drive motor is in transmission connection with a pair of wheels of the electric vehicle. The motor controller includes a plurality of switching transistor bridge arms, each switching transistor bridge arm includes an upper bridge arm switching transistor and a lower bridge arm switching transistor, and a bridge arm midpoint of each switching transistor bridge arm is configured to connect to a single-phase winding in the multiphase winding. Two ends of each switching transistor bridge arm are configured to connect to two ends of a bus capacitor. The control method includes: in response to that the drive motor rotates with the pair of wheels, controlling the switch module to connect one end of a power battery to a center tap of the multiphase winding of the drive motor.

The control method includes: in response to that an output voltage of the power battery is less than a preset voltage value in a process in which the drive motor rotates with the pair of wheels, controlling an upper bridge arm switching transistor of at least one switching transistor bridge arm to be turned on at a preset duty cycle in each switching cycle, and controlling a lower bridge arm switching transistor of the at least one switching transistor bridge arm to remain turned off; or
in response to that an output voltage of the power battery is less than a preset voltage value in a process in which the drive motor rotates with the pair of wheels, controlling an upper bridge arm switching transistor and a lower bridge arm switching transistor of at least one switching transistor bridge arm to be alternately turned on.

In an implementation of the fourth aspect, the electric vehicle includes another drive motor, and the another drive motor is configured to be in transmission connection with another pair of wheels of the electric vehicle. The control method includes: in response to that the another drive motor rotates with the another pair of wheels to generate an induced current and a voltage at both ends of the bus capacitor is greater than a preset voltage value, controlling the switch module to connect one end of the power battery to the center tap of the multiphase winding of the drive motor, controlling an upper bridge arm switching transistor of at least one switching transistor bridge arm to be turned on at a preset duty cycle in each switching cycle, and controlling a lower bridge arm switching transistor of the at least one switching transistor bridge arm to remain turned off; or
in response to that the another drive motor rotates with the another pair of wheels to generate an induced current and a voltage at both ends of the bus capacitor is greater than a preset voltage value, controlling the switch module to connect one end of the power battery to the center tap of the multiphase winding of the drive motor, and controlling an upper bridge arm switching transistor and a lower bridge arm switching transistor of at least one switching transistor bridge arm to be alternately turned on.

In an implementation of the fourth aspect, the control method includes: in response to a first torque signal, controlling the switch module to connect one end of the power battery to one end of the plurality of switching transistor bridge arms, and controlling the motor controller to drive the drive motor to output torque, where a torque value indicated by the first torque signal is greater than a preset torque value.

In an implementation of the fourth aspect, the control method includes: in response to a second torque signal, controlling the switch module to connect one end of the power battery to one end of the plurality of switching transistor bridge arms, and controlling switching transistors of the plurality of switching transistor bridge arms to be turned off, where a torque value indicated by the second torque signal is less than the preset torque value.

According to the control method for an electric vehicle provided in this application, when the output voltage of the power battery is low, the voltage at both ends of the bus capacitor may be increased; or when the voltage at both ends of the bus capacitor is high, the voltage at both ends of the bus capacitor may be decreased. According to the control method for an electric vehicle provided in this application, output efficiency and output power of a power system of the electric vehicle may be improved, thereby improving an endurance mileage and power performance of the electric vehicle.

### BRIEF DESCRIPTION OF DRAWINGS

FIG. 1 is a schematic of an electric vehicle according to an embodiment of this application;
FIG. 2 is a schematic of a power system of an electric vehicle according to an embodiment of this application;
FIG. 3 is a schematic of a motor controller according to an embodiment of this application;
FIG. 4 is another schematic of a motor controller according to an embodiment of this application;
FIG. 5 is a schematic of running of a motor controller according to an embodiment of this application;
FIG. 6A and FIG. 6B are other schematics of running of a motor controller according to an embodiment of this application;
FIG. 7A and FIG. 7B are other schematics of running of a motor controller according to an embodiment of this application;
FIG. 8 is another schematic of running of a motor controller according to an embodiment of this application; and
FIG. 9 is a schematic of a powertrain according to an embodiment of this application.

### DESCRIPTION OF EMBODIMENTS

The following clearly describes technical solutions in embodiments of this application with reference to accompanying drawings in embodiments of this application.

It may be understood that a connection relationship described in this application is a direct or indirect connection. For example, that A is connected to B may be that A is directly connected to B, or may be that A is indirectly connected to B by using one or more other electrical components. For example, A may be directly connected to C, and C may be directly connected to B, so that A and B are connected by using C. It may be further understood that "A is connected to B" described in this application may be that A is directly connected to B, or may be that A is indirectly connected to B by using one or more other electrical components.

In descriptions of this application, unless otherwise specified, "/" means "or". For example, A/B may represent A or B. The term "and/or" in this specification describes only an association relationship between associated objects and indicates that three relationships may exist. For example, A and/or B may represent the following three cases: Only A exists, both A and B exist, and only B exists.

In descriptions of this application, the words such as "first", "second", and the like are merely used to distinguish between different objects, and do not limit quantities and execution sequences. In addition, the words such as "first", "second", and the like are not necessarily different. In addition, the terms "including" and "having" and any other variants thereof are intended to cover a non-exclusive inclusion.

The technical solutions of this application are further described below in detail with reference to the accompanying drawings.

A drive system of an electric vehicle develops towards a direction of a high voltage, that is, a working voltage of a drive motor of the electric vehicle becomes increasingly higher. Increasing the working voltage of the drive motor may reduce a working current of the drive motor, thereby reducing costs of a conduction wire of the drive motor. In addition, power density, efficiency, and a rotation speed of the drive motor may be improved, and a requirement for high power output of the drive motor may be met. In the electric vehicle, a motor controller receives electric power from a power battery and provides a working voltage for the drive motor. However, in a discharge process of the power battery, an output voltage of the power battery decreases as a quantity of electricity of the power battery decreases. When a remaining quantity of electricity of the power battery is small, the output voltage of the power battery decreases, and therefore it is difficult for the drive motor to run at a high working voltage, thereby reducing output power and working efficiency of the drive motor. In addition, the current electric vehicle has an energy recovery function. To be specific, in a braking process of the electric vehicle, the drive motor runs in an electric power generation mode, and the motor controller converts a high-voltage alternating current generated by the drive motor into a direct current to charge the power battery. However, the drive motor generates a high-voltage alternating current when generating electric power. After the motor controller converts the high-voltage alternating current generated by the drive motor into a high-voltage direct current, if a voltage of the high-voltage direct current exceeds a charging voltage of the power battery, performance of the power battery is to be damaged.

A manner of resolving the foregoing problem is to dispose a bidirectional DC-DC conversion circuit in the electric vehicle. When the output voltage of the power battery is low, the bidirectional DC-DC conversion circuit is configured to increase the output voltage of the power battery and supply electric power to the drive motor, to increase the working voltage of the drive motor. When the drive motor is configured to generate electric power, the bidirectional DC-DC conversion circuit is configured to decrease a voltage of high-voltage electricity generated by the drive motor and charge the power battery.

However, using the bidirectional DC-DC conversion circuit to resolve the foregoing problem increases costs, increases a volume of a powertrain, and causes a problem such as a heat dissipation difficulty.

Therefore, this application provides a motor controller, a powertrain, an electric vehicle, and a control method for an electric vehicle, to save costs and an occupied area of additionally disposing a bidirectional DC-DC conversion circuit, thereby reducing heat generation, improving running efficiency and a torque output capability of a drive motor, and increasing an endurance capability of the electric vehicle.

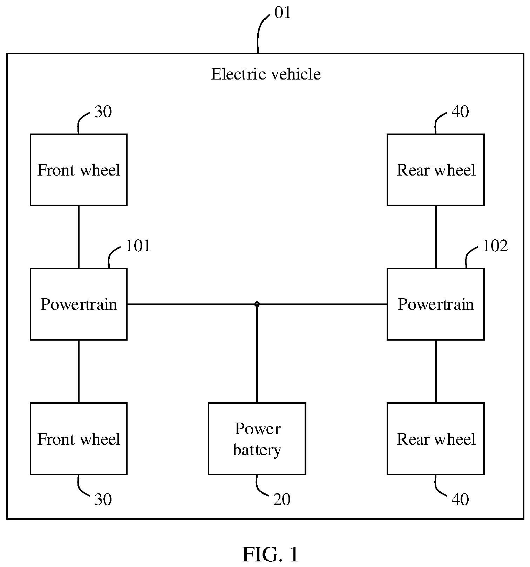

FIG. 1 is a diagram of a structure of an electric vehicle 01 according to an embodiment of this application. The electric vehicle 01 includes a powertrain 101, a powertrain 102, a power battery 20, two front wheels 30, and two rear wheels 40.

The power battery 20 is electrically connected to the powertrain 101 and the powertrain 102. The power battery 20 is configured to supply electric power to the powertrain 101 and the powertrain 102.

In an embodiment, the powertrain 101 is configured to drive the two front wheels 30, and the powertrain 102 is configured to drive the two rear wheels 40.

In an embodiment, the powertrain 101 is configured to drive the two rear wheels 40, and the powertrain 102 is configured to drive the two front wheels 30.

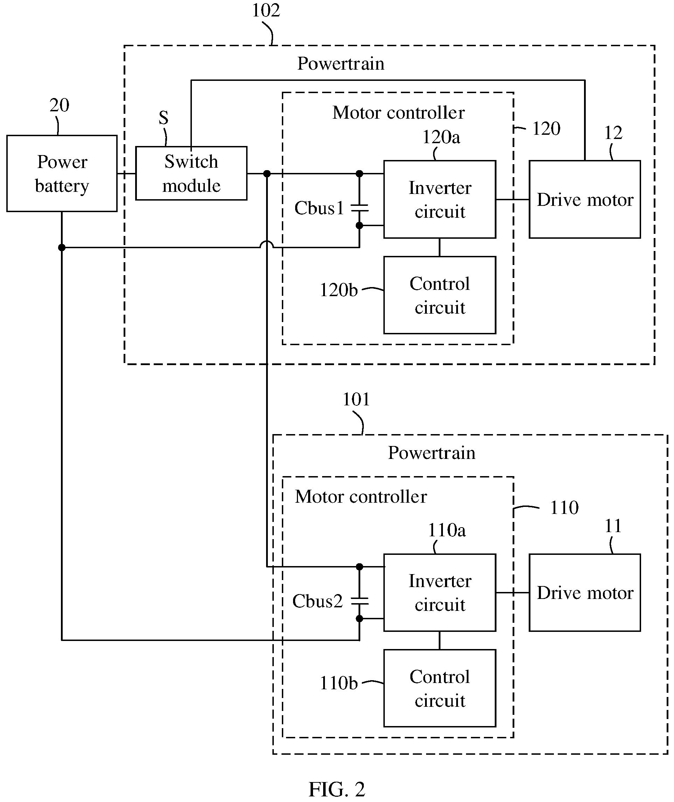

Further, FIG. 2 is a schematic of structures of the powertrain 101 and the powertrain 102 according to this application. The powertrain 101 includes a drive motor 11 and a motor controller 110 that is configured to control the drive motor 11. The powertrain 102 includes a drive motor 12, a switch module S, and a motor controller 120 that is configured to control the drive motor 12.

The power battery 20 is electrically connected to the motor controller 110 and the motor controller 120, and the power battery 20 is configured to supply electric power to the motor controller 110 and the motor controller 120. The motor controller 110 includes an inverter circuit 110a, a bus capacitor Cbus2, and a control circuit 110b. The motor controller 120 includes an inverter circuit 120a, a bus capacitor Cbus1, and a control circuit 120b.

In this embodiment of this application, the powertrain 102 is an auxiliary powertrain, and the powertrain 101 is a main powertrain. In a traveling process of the electric vehicle 01, the main powertrain implements a main driving function, and the auxiliary powertrain cooperates with the main powertrain to output power. The main powertrain and the auxiliary powertrain cooperate with each other to drive the electric vehicle 01, so that power performance of the electric vehicle 01 may be enhanced, and the two motors run in a highly efficient working range.

A running status of the powertrain 102 includes a driving state and a rotating state.

When the powertrain 102 is in the driving state, the powertrain 102 is configured to drive the wheels 30. Specifically, when the powertrain 102 runs in the driving state, the motor controller 120 is configured to output a three-phase alternating current to the drive motor 12, to drive the drive motor 12 to output torque. When the powertrain 102 runs in the driving state, the powertrain 102 and the powertrain 101 jointly drive the electric vehicle 01.

When the powertrain 102 is in the rotating state, the drive motor 12 rotates with rotation of the wheels 30, the drive motor 12 does not output torque to the wheels 30, and the motor controller 120 does not output a three-phase alternating current either. When the powertrain 102 runs in the rotating state, the motor controller 120 is turned off, the powertrain 102 does not output torque, and the powertrain 101 independently drives the electric vehicle 01.

In a traveling process of the electric vehicle 01, the drive motor 12 cooperates with the drive motor 11 to drive the wheels 40 of the electric vehicle. The motor controller 120 is configured to control torque output of the drive motor 12, and the motor controller 120 includes the inverter circuit 120a including a plurality of switching transistor bridge arms. When the powertrain 102 is in the driving state, upper bridge arm switching transistors and lower bridge arm switching transistors of the plurality of switching transistor bridge arms of the inverter circuit 120a are alternately turned on, and the inverter circuit 102a is configured to convert a direct current from the power battery 20 into an alternating current, to drive the drive motor 12 to output torque. When the powertrain 102 is in the rotating state, the plurality of switching transistors of the inverter circuit 102a are turned off, the inverter circuit 102a does not output a drive current, and the drive motor 12 does not output torque.

Still refer to FIG. 2. The powertrain 102 further includes the switch module S. The switch module S is configured to receive a switch module control signal output by the control circuit 120b in the motor controller 120, to connect the power battery 20 to the inverter circuit 120a, or connect the power battery 20 to the drive motor 12.

When the switch module S runs in a first state, the switch module S is configured to connect a center tap of the drive motor 12 to one end of the power battery 20. When the switch module S runs in a second state, the switch module S is configured to connect one end of three bridge arms of the inverter circuit 120a to one end of the power battery 20.

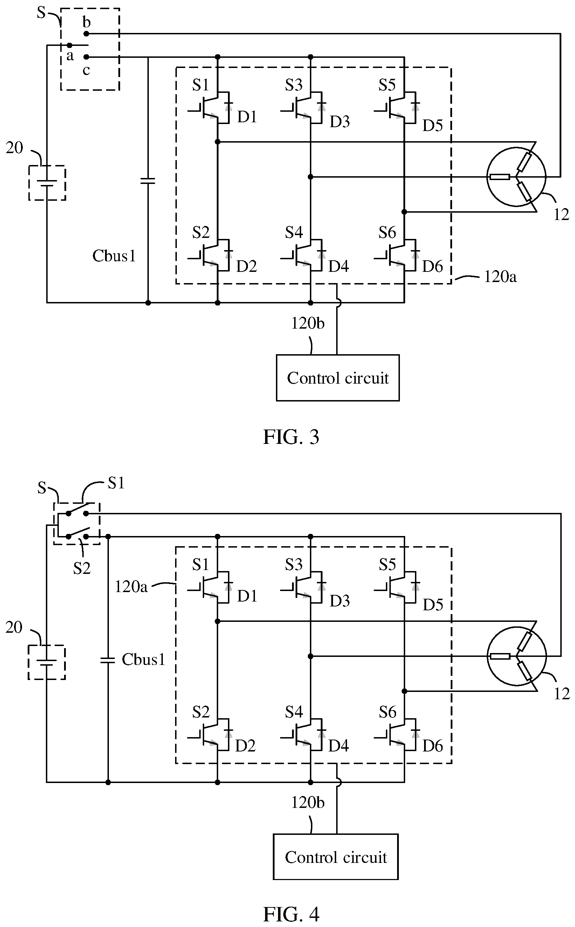

In an embodiment, the switch module S is a single-pole double-throw switch. As shown in FIG. 3, the switch module S includes a movable contact a, a stationary contact b, and a stationary contact c. When the movable contact a is connected to the stationary contact b, the switch module S is in the first state. When the movable contact a is connected to the stationary contact c, the switch module S is in the second state.

In an embodiment, as shown in FIG. 4, the switch module S includes a first switch S1 and a second switch S2. When the first switch S1 is closed and the second switch S2 is open, the switch module S is in the first state. When the first switch S1 is open and the second switch S2 is closed, the switch module is in the second state.

The control circuit 120b provided in this embodiment of this application is configured to output a switch module control signal, to control the switch module to be in the first state or the second state.

In an embodiment, the drive motor 11 is a permanent magnet synchronous motor, and the drive motor 12 is an induction motor. The drive motor 11 is a main drive motor. The permanent magnet synchronous motor has advantages of high motor power density, high energy conversion efficiency, and low energy consumption. The main drive motor is disposed as the permanent magnet synchronous motor, so that the power performance of the electric vehicle 01 may be improved, and energy may be saved. The drive motor 12 is an auxiliary drive motor. The induction motor has advantages of high reliability and a low cost. The auxiliary drive motor is disposed as the induction motor, so that reliability of a power system of the electric vehicle 01 may be improved, and costs of the power system of the electric vehicle 01 may be reduced.

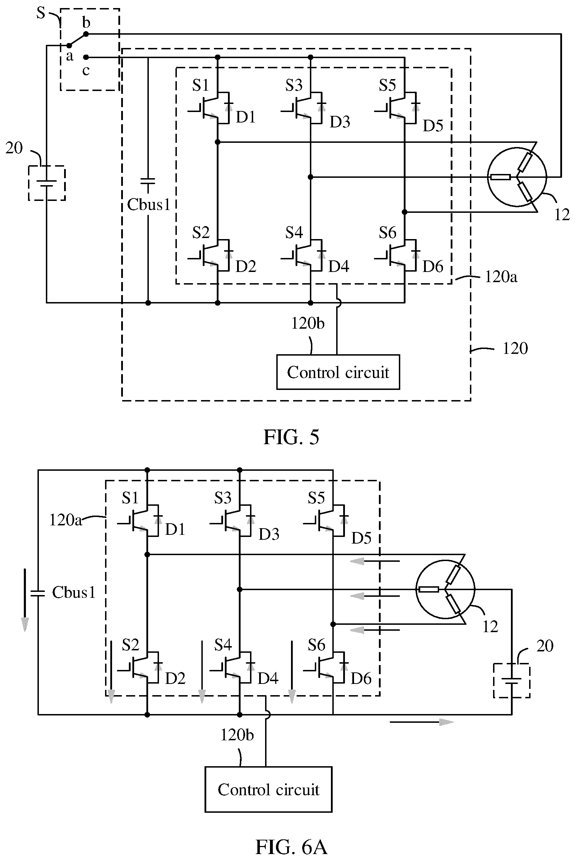

FIG. 5 is a schematic of the powertrain 102 according to an embodiment of this application. The powertrain 102 includes the drive motor 12, the motor controller 120, and the switch module S. The motor controller 120 includes the control circuit 120b and the inverter circuit 120a. The inverter circuit 120a includes the plurality of switching transistor bridge arms, and each switching transistor bridge arm includes an upper bridge arm switching transistor and a lower bridge arm switching transistor. Bridge arm midpoints of the plurality of switching transistor bridge arms are configured to connect to a multiphase winding of the drive motor 12, one end of each switching transistor bridge arm is configured to connect to one end of the bus capacitor Cbus1, the other end of each switching transistor bridge arm is configured to connect to the other end of the bus capacitor Cbus1, the one end of each switching transistor bridge arm is configured to connect to one end of the power battery 20, and a center tap of the multiphase winding of the drive motor 12 is configured to connect to the other end of the power battery 20 by using the switch module S.

According to the invention, in response to that an output voltage of the power battery 20 is less than a preset voltage value and the drive motor 12 rotates with the wheels 40, the control circuit 120b controls the switch module S to connect the center tap of the drive motor to one end of the power battery 20, and controls the inverter circuit 120a to increase a voltage at both ends of the bus capacitor Cbus1.

In the electric vehicle 01, the drive motor 11 is the main drive motor, and the drive motor 12 is the auxiliary drive motor. In a traveling process of the electric vehicle 01, the drive motor 11 is a main power source, and the drive motor 12 cooperates with the drive motor 11 to provide power for the electric vehicle 01. A quantity of electricity of the power battery 20 is continuously consumed, thereby causing a decrease in the output voltage of the power battery 20. The decrease in the output voltage of the power battery 20 causes a decrease in a working voltage of the drive motor 11. Consequently, working efficiency and output power of the drive motor 11 decrease, thereby affecting the power performance and a vehicle endurance mileage of the electric vehicle 01. According to the motor controller 120 provided in this embodiment of this application, when the output voltage of the power battery 20 is insufficient, the plurality of switching transistor bridge arms of the motor controller 120 and the multiphase winding of the drive motor 12 form a boost (boost) circuit. The motor controller uses the boost circuit to increase the voltage at both ends of the bus capacitor Cbus1. Because the bus capacitor Cbus1 of the powertrain 102 and the bus capacitor Cbus2 of the powertrain 101 are connected in parallel, when the voltage at both ends of the bus capacitor Cbus1 increases, a voltage at both ends of the bus capacitor Cbus2 increases accordingly, so that the drive motor 11 runs at a higher working voltage, thereby improving the working efficiency and the output power of the drive motor 11, and improving vehicle endurance and the power performance of the electric vehicle 01.

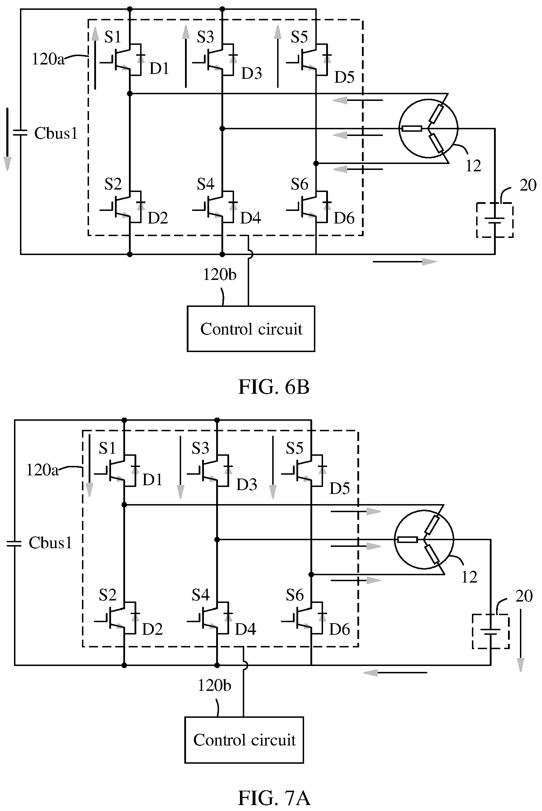

FIG. 6A and FIG. 6B are schematics of a process in which the motor controller 120 is configured to increase the voltage at both ends of the bus capacitor Cbus1. In this process, the switch module S is in the first state, that is, the switch module S is configured to connect the center tap of the drive motor 12 to a positive electrode of the power battery 20. The switch module S is not shown in the accompanying drawings herein.

In a process in which the drive motor 12 rotates with the wheels 40, the control circuit 120b is configured to: in response to that the output voltage of the power battery 20 is less than the preset voltage value, control a lower bridge arm switching transistor of at least one switching transistor bridge arm to be turned on at a preset duty cycle in each switching cycle.

The control circuit 120b is configured to control a lower bridge arm switching transistor of at least one switching transistor bridge arm to be turned on at a preset duty cycle in each switching cycle, and control an upper bridge arm switching transistor of the at least one switching transistor bridge arm to remain turned off, to increase the voltage at both ends of the bus capacitor Cbus1.

Specifically, each switching cycle of the lower bridge arm switching transistor of the at least one switching transistor bridge arm is divided into two stages. At a moment T1, at least one lower bridge arm switching transistor of the inverter circuit 120a is turned on, and the power battery 20 is configured to charge a winding inductor that is of the drive motor 12 and that is connected to a bridge arm corresponding to the lower bridge arm switching transistor in a turned-on state. In an embodiment, as shown in FIG. 6A, at the moment T1, three lower bridge arm switching transistor of the inverter circuit 120a are turned on, and a current flowing from the positive electrode of the power battery 20 sequentially passes through a three-phase winding of the drive motor 12 and the three lower bridge arm switching transistors of the inverter circuit 120a, and finally flows back to a negative electrode of the power battery 20. In this process, the power battery 20 is configured to charge an inductor of the three-phase winding of the drive motor 12.

At a moment T2, the lower bridge arm switching transistor of the inverter circuit 120a is turned off, and the power battery 20 and the charged winding of the drive motor 12 are jointly configured to charge the bus capacitor Cbus1, to increase the voltage at both ends of the bus capacitor Cbus1. According to the invention and as shown in FIG. 6B, at the moment T2, the lower bridge arm switching transistors of the inverter circuit 120a are turned off, and a current flowing from the positive electrode of the power battery 20 sequentially passes through the three-phase winding of the drive motor 12, freewheeling diodes D1, D3, and D5, and the bus capacitor Cbus1, and finally flows back to the negative electrode of the power battery 20. In this process, the power battery 20 and the three-phase winding of the drive motor 12 jointly charge the bus capacitor Cbus1, and the voltage at both ends of the bus capacitor Cbus1 is a sum of a voltage of the power battery 20 and a voltage of the three-phase winding of the drive motor 12, so that the voltage at both ends of the bus capacitor Cbus1 is greater than the output voltage of the power battery 20.

According to the invention, in a process in which the drive motor 12 rotates with the wheels 40, the control circuit 120b is configured to: in response to that the output voltage of the power battery 20 is less than the preset voltage value, control an upper bridge arm switching transistor and a lower bridge arm switching transistor of at least one switching transistor bridge arm to be alternately turned on.

Specifically, at a moment T1, at least one lower bridge arm switching transistor of the inverter circuit 120a is turned on, and the power battery 20 is configured to charge a winding inductor that is of the drive motor 12 and that is connected to a bridge arm corresponding to the lower bridge arm switching transistor in a turned-on state. A specific principle of this process is described above, and details are not described herein.

At a moment T2, the at least one lower bridge arm switching transistor of the inverter circuit 120a is turned off, an upper bridge arm switching transistor corresponding to the lower bridge arm switching transistor is turned on, and the winding of the drive motor 12 and the power battery 20 jointly charge the bus capacitor Cbus1, so that the voltage at both ends of the bus capacitor Cbus1 is greater than the output voltage of the power battery 20.

For example, at the moment T1, a switching transistor S2 is turned on, and a current flows out from the positive electrode of the power battery 20, sequentially flows through a U-phase winding of the drive motor and the switching transistor S2, and finally flows back to the negative electrode of the power battery 20. In this process, the power battery 20 charges the U-phase winding of the drive motor 12. At the moment T2, the switching transistor S2 is turned off, a switching transistor S1 is turned on, and a current flows out from the positive electrode of the power battery 20, sequentially flows through the U-phase winding of the drive motor 12, the switching transistor S1, and the bus capacitor Cbus1, and finally flows back to the negative electrode of the power battery 20. In this process, the power battery 20 and the U-phase winding of the drive motor jointly charge the bus capacitor Cbus1, so that the voltage at both ends of the bus capacitor Cbus1 is greater than the output voltage of the power battery 20.

With reference to the specific embodiment, the foregoing provides a description that when the output voltage of the power battery 20 is low in a process in which the drive motor 11 outputs torque, the motor controller 120 and the drive motor 12 are configured to increase the voltage at both ends of the bus capacitor Cbus1, to increase the voltage at both ends of the bus capacitor Cbus2, so that the drive motor 11 runs at a high working voltage.

A running status of the drive motor 11 includes a driving state and an electric power generation state. When the drive motor 11 runs in the driving state, the drive motor 11 is configured to convert electric energy of the power battery 20 into kinetic energy of the electric vehicle 01. When the drive motor 11 runs in the electric power generation state, the drive motor 11 rotates with the wheels 30 to generate an induced current, and the drive motor 11 is configured to convert kinetic energy of the electric vehicle 01 into electric energy to charge the power battery 20. For example, in a braking process of the electric vehicle 01, the drive motor 11 runs in the electric power generation state, the drive motor 11 converts kinetic energy of the electric vehicle into a high-voltage alternating current, and the motor controller 110 converts the high-voltage alternating current into a direct current to charge the power battery 20. When the voltage at both ends of the bus capacitor Cbus1 is excessively high in a process in which the drive motor 11 outputs torque, the motor controller 120 and the drive motor 11 are configured to decrease the voltage at both ends of the bus capacitor Cbus1, to decrease the voltage at both ends of the bus capacitor Cbus2, so that the power battery 20 receives electric energy generated by the drive motor 11.

In this embodiment of this application, in a process in which the drive motor 11 rotates with the wheels 30 to generate the induced current, in response to that the voltage at both ends of the bus capacitor Cbus1 is greater than a preset voltage value, the control circuit 120b controls the inverter circuit 120a to decrease the voltage at both ends of the bus capacitor Cbus1.

In this embodiment of this application, when the drive motor 11 runs in the electric power generation state, the drive motor 11 rotates with the wheels 30 and outputs an alternating current. The motor controller 110 is configured to receive the alternating current generated by the drive motor 11 and convert the alternating current into a direct current. The power battery 20 receives the direct current from the motor controller 110 by using the bus capacitor Cbus2. If a voltage of the direct current generated by the motor controller 110 is excessively high, performance of the power battery 20 is to be negatively affected. In this case, the voltage of the direct current from the motor controller 110 needs to be decreased before the power battery 20 is charged.

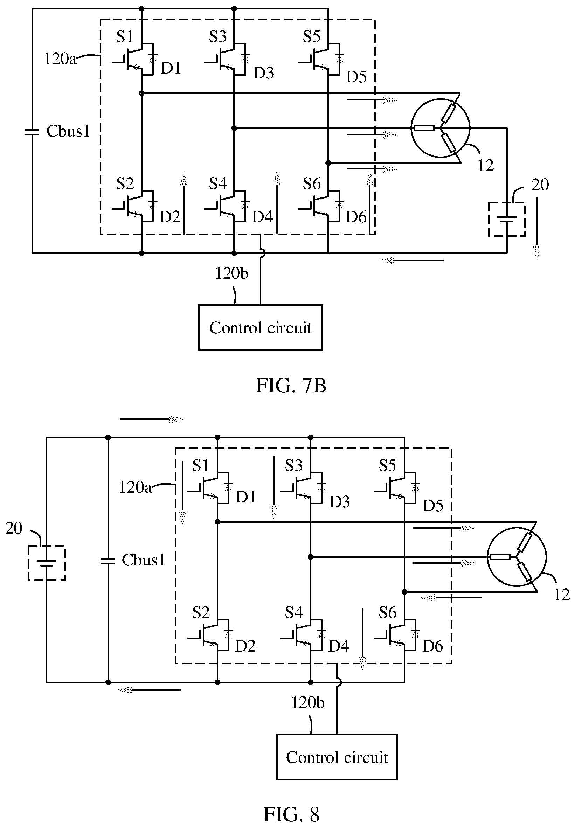

In an embodiment, as shown in FIG. 7A and FIG. 7B, the motor controller 120 controls the switch module S to be in the first state, that is, the switch module S is configured to connect the center tap of the drive motor 12 to the positive electrode of the power battery 20. A specific structure of the switch module S is not specifically shown in FIG. 7A and FIG. 7B.

In an embodiment, in the process in which the drive motor 11 rotates with the wheels 30 to generate the induced current, in response to that the voltage at both ends of the bus capacitor Cbus1 is greater than the preset voltage value, the control circuit 120b controls an upper bridge arm switching transistor of at least one switching transistor bridge arm to be turned on at a preset duty cycle in each switching cycle.

Specifically, each switching cycle of the upper bridge arm switching transistor of the at least one switching transistor bridge arm may be divided into a turned-on stage and a turned-off stage. At a moment T1, at least one upper bridge arm switching transistor of the inverter circuit 120a is turned on, and the bus capacitor Cbus1 is configured to charge a winding inductor that is of the drive motor 12 and that is connected to a bridge arm corresponding to the upper bridge arm switching transistor in a turned-on state, and charge the power battery 20. In an embodiment, as shown in FIG. 7A, at the moment T1, three upper bridge arm switching transistor bridge arms of the inverter circuit 120a are turned on, and a current flowing from the bus capacitor Cbus1 sequentially passes through the three upper bridge arm switching transistors of the inverter circuit 120a, the three-phase winding of the drive motor 12, and the power battery 20, and finally flows back to the bus capacitor Cbus1. In this process, the bus capacitor Cbus1 is configured to charge the inductor of the three-phase winding of the drive motor 12 and the power battery 20. Therefore, a charging voltage of the power battery 20 is less than the voltage at both ends of the bus capacitor Cbus1.

At a moment T2, the upper bridge arm switching transistor of the inverter circuit 120a is turned off, and the charged winding of the drive motor 12 is configured to charge the power battery 20. In an embodiment, as shown in FIG. 7B, at the moment T2, the upper bridge arm switching transistors of the inverter circuit 120a are turned off, and a current flowing from the three-phase winding of the drive motor 12 sequentially passes through the power battery 20, freewheeling diodes D2, D4, and D6, and the bus capacitor Cbus1, and finally flows back to the three-phase winding of the drive motor 12. In this process, the three-phase winding of the drive motor 12 is configured to charge the power battery 20. Because the voltage of the winding of the drive motor 12 is less than the voltage at both ends of the bus capacitor Cbus1, in this process, the charging voltage of the power battery 20 is less than the voltage at both ends of the bus capacitor Cbus1.

In an embodiment, in the process in which the drive motor 11 rotates with the wheels 30 to generate the induced current, in response to that the voltage at both ends of the bus capacitor Cbus1 is greater than the preset voltage value, the control circuit 120b controls an upper bridge arm switching transistor and a lower bridge arm switching transistor of at least one switching transistor bridge arm to be alternately turned on.

Specifically, at a moment T1, an upper bridge arm switching transistor of at least one switching transistor bridge arm of the inverter circuit 120a is turned on, and the bus capacitor Cbus1 charges the power battery 20 by sequentially using the upper bridge arm switching transistor of the at least one bridge arm and a winding connected to a bridge arm midpoint corresponding to the turned-on switching transistor. In this process, the bus capacitor Cbus1 charges the winding of the drive motor 12, and the winding of the drive motor 12 implements voltage division, so that the charging voltage of the power battery 20 is less than the voltage at both ends of the bus capacitor Cbus1. A specific principle of this process is described above, and details are not described herein.

At a moment T2, the at least one upper bridge arm switching transistor of the inverter circuit 120a is turned off, a lower bridge arm switching transistor corresponding to the upper bridge arm switching transistor is turned on, and the winding of the drive motor 12 charges the power battery 20, so that the charging voltage of the power battery 20 is less than the voltage at both ends of the bus capacitor Cbus1.

For example, at the moment T1, the switching transistor S1 is turned on, and a current flows out from the bus capacitor Cbus1, sequentially flows through the U-phase winding of the drive motor and the power battery 20, and finally flows back to the bus capacitor Cbus1. In this process, the bus capacitor Cbus1 charges the U-phase winding of the drive motor 12 and the power battery 20. At the moment T2, the switching transistor S1 is turned off, the switching transistor S2 is turned on, and a current flows out from the U-phase winding of the drive motor 12, flows through the power battery 20, and finally flows back to the U-phase winding of the drive motor 12. In this process, the U-phase winding of the drive motor 12 is configured to charge the power battery 20.

In this embodiment of this application, the electric vehicle 01 includes a vehicle controller 50. The vehicle controller 50 is configured to output a torque signal based on a running status of the electric vehicle and a driving intention of a driver. The torque signal is used to indicate torque that needs to be output by the drive motor 11. In a traveling process of the electric vehicle 01, if a quantity of electricity of the power battery is insufficient, the output voltage of the power battery 20 is low, and the drive motor 11 has low running efficiency when receiving electric power supplied by the power battery 20 and outputting the torque indicated by the torque signal, thereby causing low energy utilization.

The motor controller 120 provided in this embodiment of this application calculates, based on the output voltage of the power battery 20, a preset torque value that may enable the drive motor 11 to run in a highly efficient range at the current output voltage of the power battery 20. If a target torque value of the drive motor 12 is greater than the preset torque value, the control circuit 120b controls the inverter circuit 120a to increase the voltage at both ends of the bus capacitor Cbus1, so that the drive motor 11 runs in a more highly efficient range. A specific process in which the motor controller 120 is configured to increase the voltage at both ends of the bus capacitor Cbus1 is shown in FIG. 6A and FIG. 6B, and details are not described herein.

In an embodiment, the motor controller 120 calculates, based on the output voltage of the power battery 20, a preset rotation speed value that may enable the drive motor 11 to run in a highly efficient range at the current output voltage of the power battery 20. If a target rotation speed value of the drive motor 12 is greater than the preset rotation speed value, the control circuit 120b controls the inverter circuit 120a to increase the voltage at both ends of the bus capacitor Cbus1, so that the drive motor 11 runs in a more highly efficient range.

In this embodiment of this application, the motor controller 120 responds to a first torque signal, and the control circuit 120b controls the switch module S to connect one end of the power battery 20 to one end of the plurality of switching transistor bridge arms, and controls the plurality of bridge arm midpoints of the inverter circuit 120a to output an alternating current, to drive the drive motor 12 to output torque, where a torque value indicated by the first torque signal is greater than the preset torque value.

When the drive motor 12 does not output torque, the bridge arms of the motor controller 120 and the three-phase winding of the motor 12 form a voltage conversion circuit to adjust the voltage at both ends of the bus capacitor. However, in a running process of the electric vehicle 01, to obtain better power performance, the drive motor 12 also needs to output torque in a specific working condition. In this case, the vehicle controller 50 outputs the first torque signal, the control circuit 120b receives the first torque signal and controls the switch module S to be in the second state, and the bridge arm midpoints of the plurality of bridge arms of the motor controller 120 output a three-phase alternating current, so that the drive motor 12 outputs torque indicated by the first torque signal.

FIG. 8 is a schematic of a current of the motor controller 120 in response to the first torque signal according to this application. When the motor controller 120 receives the first torque signal, the control circuit 10b outputs a switch control signal, to control the switch module S to be in the second state. The switch module S is not specifically shown herein. The inverter circuit 120a is controlled to output an alternating current to the drive motor 12, so that the drive motor 12 outputs corresponding torque. Phase differences of output currents of three switching transistor bridge arms in the inverter circuit 120a are 120 degrees to each other, and a vector sum of the output currents of the three switching transistor bridge arms is zero.

In this embodiment of this application, the motor controller 120 responds to a second torque signal, and the control circuit 120b is configured to control the switching transistors of the plurality of switching transistor bridge arms to be turned off, to save energy. A torque value indicated by the second torque signal is less than the preset torque value.

When neither the drive motor 12 needs to output torque nor the inverter circuit 120a and the multiphase winding of the drive motor 12 need to form a voltage conversion circuit to adjust the voltage at both ends of the bus capacitor Cbus1, the switching transistors of the inverter circuit of the motor controller are turned off to save energy.

The second torque signal may be understood as a zero torque output signal, and the second torque signal is used to control the powertrain 102 to output zero torque. In a traveling process of the electric vehicle 0, to enable the drive motor 12 to be in the rotating state in which no torque is output, the vehicle controller 50 outputs the second torque signal. The torque value indicated by the second torque signal is a zero torque value or a very small torque value less than the preset torque value.

For example, the preset torque value is 0.5 N·m. If a torque value indicated by a torque signal is less than or equal to 0.5 N·m, the powertrain 20 is in the rotating state, and the drive motor 12 does not output torque.

The control circuit 120b provided in this embodiment of this application turns off the switching transistors of the inverter circuit 120a when receiving a zero torque signal, so that energy may be saved, thereby improving vehicle endurance of the electric vehicle 01.

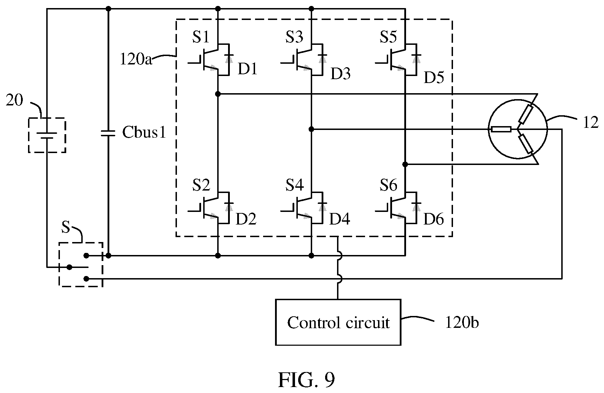

FIG. 9 is another schematic of the powertrain 102 according to this application. A difference between the powertrain 102 provided in this embodiment and FIG. 5 lies in that, in this embodiment, a first end of the switch module S is electrically connected to the negative electrode of the power battery 20.

Based on the foregoing concept, an embodiment of this application further provides a control method for an electric vehicle.

The control method provided in this embodiment of this application includes: in response to that a drive motor rotates with a pair of wheels, controlling a switch module to connect one end of a power battery to a center tap of a multiphase winding of the drive motor.

According to the invention, the control method includes: in response to that an output voltage of the power battery is less than a preset voltage value in a process in which the drive motor rotates with the pair of wheels, controlling an upper bridge arm switching transistor of at least one switching transistor bridge arm to be turned on at a preset duty cycle in each switching cycle, and controlling a lower bridge arm switching transistor of the at least one switching transistor bridge arm to remain turned off.

Alternatively, according to the invention, the control method includes: in response to that an output voltage of the power battery is less than a preset voltage value in a process in which the drive motor rotates with the pair of wheels, controlling an upper bridge arm switching transistor and a lower bridge arm switching transistor of at least one switching transistor bridge arm to be alternately turned on.

In an embodiment, the electric vehicle includes another drive motor, and the another drive motor is configured to be in transmission connection with another pair of wheels of the electric vehicle. The control method includes: in response to that the another drive motor rotates with the another pair of wheels to generate an induced current and a voltage at both ends of a bus capacitor is greater than a preset voltage value, controlling the switch module to connect one end of the power battery to the center tap of the multiphase winding of the drive motor, controlling an upper bridge arm switching transistor of at least one switching transistor bridge arm to be turned on at a preset duty cycle in each switching cycle, and controlling a lower bridge arm switching transistor of the at least one switching transistor bridge arm to remain turned off.

In an embodiment, the control method includes: in response to that the another drive motor rotates with the another pair of wheels to generate an induced current and a voltage at both ends of the bus capacitor is greater than a preset voltage value, controlling the switch module to connect one end of the power battery to the center tap of the multiphase winding of the drive motor, and controlling an upper bridge arm switching transistor and a lower bridge arm switching transistor of at least one switching transistor bridge arm to be alternately turned on.

In an embodiment, the control method includes: in response to a first torque signal, controlling the switch module to connect one end of the power battery to one end of a plurality of switching transistor bridge arms, and controlling a motor controller to drive the drive motor to output torque, where a torque value indicated by the first torque signal is greater than a preset torque value.

In an embodiment, the control method includes: in response to a second torque signal, controlling the switch module to connect one end of the power battery to one end of the plurality of switching transistor bridge arms, and controlling switching transistors of the plurality of switching transistor bridge arms to be turned off, where a torque value indicated by the second torque signal is less than the preset torque value.

According to the control method provided in this embodiment of this application, a working mode of the switch module S and a working manner of the switching transistor bridge arms are adjusted, so that the powertrain 102 may run in different modes, thereby improving energy utilization efficiency, vehicle endurance, and power performance of the electric vehicle 01.

A person of ordinary skill in the art may understand that various numeric numbers such as "first" and "second" in this application are merely for ease of description and are not intended to limit the scope of embodiments of this application or a sequence. Execution sequences of processes should be determined based on functions and internal logic of the processes.

## Claims

1. A motor controller (120) for an electric vehicle (01), wherein the motor controller (120) comprises an inverter circuit (120a), a bus capacitor (Cbus1) and a control circuit (120b); the inverter circuit (120a) comprises a plurality of switching transistor bridge arms, and each switching transistor bridge arm comprises an upper bridge arm switching transistor and a lower bridge arm switching transistor; and bridge arm midpoints of the plurality of switching transistor bridge arms are configured to connect to a multiphase winding of a drive motor (12), one end of each switching transistor bridge arm is configured to connect to one end of the bus capacitor (Cbus1) and one end of a power battery (20) of the electric vehicle (01), and the other end of each switching transistor bridge arm is configured to connect to the other end of the bus capacitor (Cbus1); the inverter circuit (120a) further comprising a switch module (S) configured to connect a center tap of the multiphase winding to the other end of the power battery (20); and
the control circuit (120b) is configured to:
in response to that an output voltage of the power battery (20) is less than a preset voltage value and the drive motor (12) rotates with a pair of wheels (30) of the electric vehicle (01), control the switch module (S) to connect the center tap of the multiphase winding to the other end of the power battery (20), and control the inverter circuit (120a) to increase a voltage at both ends of the bus capacitor (Cbus1),
**characterized in that**
in a process in which the drive motor (12) rotates with the pair of wheels (30), the control circuit (120b) is configured to, in response to that the output voltage of the power battery (20) is less than the preset voltage value:
either control a lower bridge arm switching transistor of at least one switching transistor bridge arm to be turned on at a preset duty cycle in each switching cycle, and control an upper bridge arm switching transistor of the at least one switching transistor bridge arm to remain turned off;
or control an upper bridge arm switching transistor and a lower bridge arm switching transistor of at least one switching transistor bridge arm to be alternately turned on.

2. The motor controller according to claim 1, wherein the electric vehicle (01) comprises another drive motor (11), the another drive motor (11) is configured to be in transmission connection with another pair of wheels (40) of the electric vehicle (01), and in a process in which the another drive motor (11) rotates with the another pair of wheels to generate an induced current, the control circuit (120b) is configured to:
in response to that the voltage at both ends of the bus capacitor (Cbus1) is greater than a preset voltage value, control the inverter circuit (120a) to decrease the voltage at both ends of the bus capacitor (Cbus1).

3. The motor controller according to claim 2, wherein in the process in which the another drive motor (11) rotates with the another pair of wheels to generate the induced current, the control circuit (120b) is configured to:
in response to that the voltage at both ends of the bus capacitor (Cbus1) is greater than the preset voltage value, control an upper bridge arm switching transistor of at least one switching transistor bridge arm to be turned on at a preset duty cycle in each switching cycle, and control a lower bridge arm switching transistor of the at least one switching transistor bridge arm to remain turned off.

4. The motor controller according to claim 2, wherein in the process in which the another drive motor (11) rotates with the another pair of wheels to generate the induced current, the control circuit (120b) is configured to:
in response to that the voltage at both ends of the bus capacitor (Cbus1) is greater than the preset voltage value, control an upper bridge arm switching transistor and a lower bridge arm switching transistor of at least one switching transistor bridge arm to be alternately turned on.

5. The motor controller according to any one of claims 1 to 4, wherein the control circuit (120b) is configured to:
in response to that a target rotation speed of the drive motor (12) is greater than a preset rotation speed value, control the inverter circuit (120a) to increase the voltage at both ends of the bus capacitor (Cbus1).

6. The motor controller according to any one of claims 1 to 5, wherein the switch module (S) is configured such that, and the control circuit (120b) is configured to:
in response to a first torque signal, control the switch module (S) to connect one end of the power battery (20) to one end of each of a plurality of switching transistor bridge arms, and control the plurality of bridge arm midpoints of the inverter circuit (120a) to output an alternating current, to drive the drive motor (12) to output torque, wherein a torque value indicated by the first torque signal is greater than a preset torque value.

7. The motor controller according to any one of claims 1 to 6, wherein the switch module (S) is configured such that, and the control circuit (120b) is configured to:
in response to a second torque signal, control the switch module (S) to connect one end of the power battery (20) to one end of the plurality of switching transistor bridge arms, and control the upper bridge arm switching transistors and the lower bridge arm switching transistors of the plurality of switching transistor bridge arms to be turned off, wherein a torque value indicated by the second torque signal is less than the preset torque value.

8. A powertrain (102) for an electric vehicle, wherein the power train comprises the motor controller (120) according to any one of claims 1 to 7 and a drive motor (12), where the drive motor (12) is an induction motor.

9. An electric vehicle (01), wherein the electric vehicle (01) comprises the motor controller (120) according to any one of claims 1 to 7 and a vehicle controller (50), and the vehicle controller (50) is configured to output a first torque signal or a second torque signal.

10. A control method for an electric vehicle (01), wherein the electric vehicle (01) comprises a motor controller (120) according to claim 1;
and the control method comprises:
in response to that the drive motor (12) rotates with the pair of wheels (30) and the output voltage of the power battery (20) being less than a preset voltage value, controlling the switch module (S) to connect one end of the power battery (20) to a center tap of the multiphase winding of the drive motor (12), and controlling the inverter circuit (120a) to increase a voltage at both ends of the bus capacitor (Cbus1),
**characterized in that**
in a process in which the drive motor (12) rotates with the pair of wheels, and in response to the output voltage of the power battery (20) being less than the preset voltage value,
either controlling a lower bridge arm switching transistor of at least one switching transistor bridge arm to be turned on at a preset duty cycle in each switching cycle, and control an upper bridge arm switching transistor of the at least one switching transistor bridge arm to remain turned off;
or controlling an upper bridge arm switching transistor and a lower bridge arm switching transistor of at least one switching transistor bridge arm to be alternately turned on

11. The control method according to claim 10,
wherein the electric vehicle comprises another drive motor (11), the another drive motor (11) is configured to be in transmission connection with another pair of wheels of the electric vehicle, and the control method comprises:
in response to that the another drive motor (11) rotates with the another pair of wheels to generate an induced current and a voltage at both ends of the bus capacitor (Cbus1) is greater than a preset voltage value, controlling the switch module (S) to connect one end of the power battery (20) to the center tap of the multiphase winding of the drive motor , controlling an upper bridge arm switching transistor of at least one switching transistor bridge arm to be turned on at a preset duty cycle in each switching cycle, and controlling a lower bridge arm switching transistor of the at least one switching transistor bridge arm to remain turned off; or
in response to that the another drive motor (11) rotates with the another pair of wheels to generate an induced current and a voltage at both ends of the bus capacitor (Cbus1) is greater than a preset voltage value, controlling the switch module (S) to connect one end of the power battery (20) to the center tap of the multiphase winding of the drive motor (12), and controlling an upper bridge arm switching transistor and a lower bridge arm switching transistor of at least one switching transistor bridge arm to be alternately turned on.

12. The control method according to any one of claims 10 or 11, further comprising:
in response to a first torque signal, controlling the switch module (S) to connect one end of the power battery (20) to one end of the plurality of switching transistor bridge arms, and controlling the motor controller (120) to drive the drive motor (12) to output torque, wherein a torque value indicated by the first torque signal is greater than a preset torque value.

13. The control method according to any one of claims 10 to 12, further comprising:
in response to a second torque signal, controlling the switch module (S) to connect one end of the power battery (20) to one end of the plurality of switching transistor bridge arms, and controlling switching transistors of the plurality of switching transistor bridge arms to be turned off, wherein a torque value indicated by the second torque signal is less than the preset torque value.

## Patentansprüche

1. Motorsteuerung (120) für ein Elektrofahrzeug (01), wobei die Motorsteuerung (120) eine Inverterschaltung (120a), einen Buskondensator (Cbus1) und eine Steuerschaltung (120b) umfasst; die Inverterschaltung (120a) eine Vielzahl von Schalttransistor-Brückenzweigen umfasst und jeder Schalttransistor-Brückenzweig einen oberen Brückenzweig-Schalttransistor und einen unteren Brückenzweig-Schalttransistor umfasst; und Brückenzweig-Mittelpunkte der Vielzahl von Schalttransistor-Brückenzweigen dazu ausgelegt sind, mit einer Mehrphasenwicklung eines Antriebsmotors (12) verbunden zu werden, wobei ein Ende jedes Schalttransistor-Brückenzweigs dazu ausgelegt ist, mit einem Ende des Buskondensators (Cbus1) und einem Ende einer Leistungsbatterie (20) des Elektrofahrzeugs (01) verbunden zu werden, und das andere Ende jedes Schalttransistor-Brückenzweigs dazu ausgelegt ist, mit dem anderen Ende des Buskondensators (Cbus1) verbunden zu werden; wobei die Inverterschaltung (120a) ferner ein Schaltmodul (S) umfasst, das dazu ausgelegt ist, einen Mittelabgriff der Mehrphasenwicklung mit dem anderen Ende der Leistungsbatterie (20) zu verbinden; und wobei die Steuerschaltung (120b) für Folgendes ausgebildet ist:
als Reaktion darauf, dass eine Ausgangsspannung der Leistungsbatterie (20) kleiner als ein voreingestellter Spannungswert ist und sich der Antriebsmotor (12) mit einem Paar von Rädern (30) des Elektrofahrzeugs (01) dreht, Steuern des Schaltmoduls (S), um den Mittelabgriff der Mehrphasenwicklung mit dem anderen Ende der Leistungsbatterie (20) zu verbinden, und Steuern der Inverterschaltung (120a), um eine Spannung an beiden Enden des Buskondensators (Cbus1) zu erhöhen,
**dadurch gekennzeichnet, dass**
in einem Prozess, bei dem sich der Antriebsmotor (12) mit dem Paar von Rädern (30) dreht, die Steuerschaltung (120b) dazu ausgelegt ist, als Reaktion darauf, dass die Ausgangsspannung der Leistungsbatterie (20) kleiner als der voreingestellte Spannungswert ist:
entweder Steuern eines unteren Brückenzweig-Schalttransistors von mindestens einem Schalttransistor-Brückenzweig, der bei einem voreingestellten Tastverhältnis in jedem Schaltzyklus eingeschaltet werden soll, und Steuern eines oberen Brückenzweig-Schalttransistors des mindestens einen Schalttransistor-Brückenzweigs, um ausgeschaltet zu bleiben;
oder Steuern eines oberen Brückenzweig-Schalttransistors und eines unteren Brückenzweig-Schalttransistors mindestens eines Schalttransistor-Brückenzweigs, um abwechselnd eingeschaltet zu werden.

2. Motorsteuerung nach Anspruch 1, wobei das Elektrofahrzeug (01) einen anderen Antriebsmotor (11) umfasst, der andere Antriebsmotor (11) dazu ausgebildet ist, in Getriebeverbindung mit einem anderen Paar von Rädern (40) des Elektrofahrzeugs (01) zu stehen, und in einem Prozess, bei dem sich der andere Antriebsmotor (11) mit dem anderen Paar von Rädern dreht, um einen induzierten Strom zu erzeugen, die Steuerschaltung (120b) für Folgendes ausgebildet ist:
als Reaktion darauf, dass die Spannung an beiden Enden des Buskondensators (Cbus1) größer als ein voreingestellter Spannungswert ist, Steuern der Inverterschaltung (120a), um die Spannung an beiden Enden des Buskondensators (Cbus1) zu verringern.

3. Motorsteuerung nach Anspruch 2, wobei in dem Prozess, in dem sich der andere Antriebsmotor (11) mit dem anderen Paar von Rädern dreht, um den induzierten Strom zu erzeugen, die Steuerschaltung (120b) für Folgendes ausgebildet ist:
als Reaktion darauf, dass die Spannung an beiden Enden des Buskondensators (Cbus1) größer als der voreingestellte Spannungswert ist, Steuern eines oberen Brückenzweig-Schalttransistors von mindestens einem Schalttransistor-Brückenzweig, der bei einem voreingestellten Tastverhältnis in jedem Schaltzyklus eingeschaltet wird, und Steuern eines unteren Brückenzweig-Schalttransistors des mindestens einen Schalttransistor-Brückenzweigs, um ausgeschaltet zu bleiben.

4. Motorsteuerung nach Anspruch 2, wobei in dem Prozess, in dem sich der andere Antriebsmotor (11) mit dem anderen Paar von Rädern dreht, um den induzierten Strom zu erzeugen, die Steuerschaltung (120b) für Folgendes ausgebildet ist:
als Reaktion darauf, dass die Spannung an beiden Enden des Buskondensators (Cbus1) größer als der voreingestellte Spannungswert ist, Steuern eines oberen Brückenzweig-Schalttransistors und eines unteren Brückenzweig-Schalttransistors von mindestens einem Schalttransistor-Brückenzweig, um abwechselnd eingeschaltet zu werden.

5. Motorsteuerung nach einem der Ansprüche 1 bis 4, wobei die Steuerschaltung (120b) für Folgendes ausgebildet ist:
als Reaktion darauf, dass eine Zieldrehzahl des Antriebsmotors (12) größer als ein vorbestimmter Drehzahlwert ist, Steuern der Inverterschaltung (120a), um die Spannung an beiden Enden des Buskondensators (Cbus1) zu erhöhen.

6. Motorsteuerung nach einem der Ansprüche 1 bis 5, wobei das Schaltmodul (S) so ausgebildet ist, und dass die Steuerschaltung (120b) für Folgendes ausgebildet ist:
als Reaktion auf ein erstes Drehmomentsignal, Steuern des Schaltmoduls (S), um ein Ende der Leistungsbatterie (20) mit einem Ende jedes einer Vielzahl von Schalttransistor-Brückenzweigen zu verbinden, und Steuern der Vielzahl von Brückenzweig-Mittelpunkten der Inverterschaltung (120a), um einen Wechselstrom auszugeben, um den Antriebsmotor (12) anzutreiben, um ein Drehmoment auszugeben, wobei ein Drehmomentwert, der durch das erste Drehmomentsignal angegeben wird, größer als ein voreingestellter Drehmomentwert ist.

7. Motorsteuerung nach einem der Ansprüche 1 bis 6, wobei das Schaltmodul (S) so ausgebildet ist, und dass die Steuerschaltung (120b) für Folgendes ausgebildet ist:
als Reaktion auf ein zweites Drehmomentsignal, Steuern des Schaltmoduls (S), um ein Ende der Leistungsbatterie (20) mit einem Ende der Vielzahl von Schalttransistor-Brückenzweigen zu verbinden, und Steuern der oberen Brückenzweig-Schalttransistoren und der unteren Brückenzweig-Schalttransistoren der Vielzahl von Schalttransistor-Brückenzweigen, die ausgeschaltet werden sollen, wobei ein Drehmomentwert, der durch das zweite Drehmomentsignal angegeben wird, kleiner als der voreingestellte Drehmomentwert ist.

8. Antriebsstrang (102) für ein Elektrofahrzeug, wobei der Antriebsstrang die Motorsteuerung (120) nach einem der Ansprüche 1 bis 7 und einen Antriebsmotor (12) umfasst, wobei der Antriebsmotor (12) ein Induktionsmotor ist.

9. Elektrofahrzeug (01), wobei das Elektrofahrzeug (01) die Motorsteuerung (120) nach einem der Ansprüche 1 bis 7 und eine Fahrzeugsteuerung (50) umfasst und die Fahrzeugsteuerung (50) dazu ausgelegt ist, ein erstes Drehmomentsignal oder ein zweites Drehmomentsignal auszugeben.

10. Steuerverfahren für ein Elektrofahrzeug (01), wobei das Elektrofahrzeug (01) eine Motorsteuerung (120) nach Anspruch 1 umfasst;
und das Steuerverfahren Folgendes umfasst:
als Reaktion darauf, dass sich der Antriebsmotor (12) mit dem Paar von Rädern (30) dreht und die Ausgangsspannung der Leistungsbatterie (20) kleiner als ein voreingestellter Spannungswert ist, Steuern des Schaltmoduls (S), um ein Ende der Leistungsbatterie (20) mit einem Mittelabgriff der Mehrphasenwicklung des Antriebsmotors (12) zu verbinden, und Steuern der Inverterschaltung (120a), um eine Spannung an beiden Enden des Buskondensators (Cbus1) zu erhöhen,
**dadurch gekennzeichnet, dass**
in einem Prozess, bei dem sich der Antriebsmotor (12) mit dem Paar von Rädern dreht, und als Reaktion darauf, dass die Ausgangsspannung der Leistungsbatterie (20) kleiner als der voreingestellte Spannungswert ist,
entweder Steuern eines unteren Brückenzweig-Schalttransistors von mindestens einem Schalttransistor-Brückenzweig, der bei einem voreingestellten Tastverhältnis in jedem Schaltzyklus eingeschaltet werden soll, und Steuern eines oberen Brückenzweig-Schalttransistors des mindestens einen Schalttransistor-Brückenzweigs, um ausgeschaltet zu bleiben;
oder Steuern eines oberen Brückenzweig-Schalttransistors und eines unteren Brückenzweig-Schalttransistors mindestens eines Schalttransistor-Brückenzweigs, die abwechselnd eingeschaltet werden sollen.

11. Steuerverfahren nach Anspruch 10, wobei das Elektrofahrzeug einen anderen Antriebsmotor (11) umfasst, der andere Antriebsmotor (11) dazu ausgelegt ist, in Getriebeverbindung mit einem anderen Paar von Rädern des Elektrofahrzeugs zu stehen, und das Steuerverfahren Folgendes umfasst:
als Reaktion darauf, dass sich der andere Antriebsmotor (11) mit dem anderen Paar von Rädern dreht, um einen induzierten Strom zu erzeugen und eine Spannung an beiden Enden des Buskondensators (Cbus1) größer als ein voreingestellter Spannungswert ist, Steuern des Schaltmoduls (S), um ein Ende der Leistungsbatterie (20) mit dem Mittelabgriff der Mehrphasenwicklung des Antriebsmotors zu verbinden, Steuern eines oberen Brückenzweig-Schalttransistors mindestens eines Schalttransistor-Brückenzweigs, der bei einem voreingestellten Tastverhältnis in jedem Schaltzyklus eingeschaltet werden soll, und Steuern eines unteren Brückenzweig-Schalttransistors des mindestens einen Schalttransistor-Brückenzweigs, um ausgeschaltet zu bleiben; oder
als Reaktion darauf, dass sich der andere Antriebsmotor (11) mit dem anderen Paar von Rädern dreht, um einen induzierten Strom zu erzeugen und eine Spannung an beiden Enden des Buskondensators (Cbus1) größer als ein voreingestellter Spannungswert ist, Steuern des Schaltmoduls (S), um ein Ende der Leistungsbatterie (20) mit dem Mittelabgriff der Mehrphasenwicklung des Antriebsmotors (12) zu verbinden, und Steuern eines oberen Brückenzweig-Schalttransistors und eines unteren Brückenzweig-Schalttransistors von mindestens einem Schalttransistor-Brückenzweig, um abwechselnd eingeschaltet zu werden.

12. Steuerverfahren nach einem der Ansprüche 10 oder 11, das ferner Folgendes umfasst:
als Reaktion auf ein erstes Drehmomentsignal, Steuern des Schaltmoduls (S), um ein Ende der Leistungsbatterie (20) mit einem Ende der Vielzahl von Schalttransistor-Brückenzweigen zu verbinden, und Steuern der Motorsteuerung (120), um den Antriebsmotor (12) anzutreiben, um Drehmoment auszugeben, wobei ein Drehmomentwert, der durch das erste Drehmomentsignal angegeben wird, größer als ein voreingestellter Drehmomentwert ist.

13. Steuerverfahren nach einem der Ansprüche 10 bis 12, das ferner Folgendes umfasst:
als Reaktion auf ein zweites Drehmomentsignal, Steuern des Schaltmoduls (S), um ein Ende der Leistungsbatterie (20) mit einem Ende der Vielzahl von Schalttransistor-Brückenzweigen zu verbinden, und Steuern von Schalttransistoren der Vielzahl der auszuschaltenden Schalttransistor-Brückenzweige, wobei ein durch das zweite Drehmomentsignal angegebener Drehmomentwert kleiner als der voreingestellte Drehmomentwert ist.

## Revendications

1. Contrôleur de moteur (120) pour véhicule électrique (01), dans lequel le contrôleur de moteur (120) comprend un circuit inverseur (120a), un condensateur de bus (Cbus1) et un circuit de contrôle (120b) ; le circuit inverseur (120a) comprend une pluralité de branches de pont de transistor de commutation, et chaque branche de pont de transistor de commutation comprend un transistor de commutation de branche de pont supérieur et un transistor de commutation de branche de pont inférieur ; et les points médians de branche de pont de la pluralité de branches de pont de transistor de commutation sont configurés pour se connecter à un enroulement multiphasé d'un moteur d'entraînement (12), une extrémité de chaque branche de pont de transistor de commutation est configurée pour se connecter à une extrémité du condensateur de bus (Cbus1) et à une extrémité d'une batterie d'alimentation (20) du véhicule électrique (01), et l'autre extrémité de chaque branche de pont de transistor de commutation est configurée pour se connecter à l'autre extrémité du condensateur de bus (Cbus1) ; le circuit inverseur (120a) comprenant en outre un module de commutation (S) configuré pour connecter une prise centrale de l'enroulement multiphasé à l'autre extrémité de la batterie d'alimentation (20) ; et
le circuit de contrôle (120b) est configuré pour :
en réponse au fait qu'une tension de sortie de la batterie d'alimentation (20) est inférieure à une valeur de tension prédéterminée et que le moteur d'entraînement (12) tourne avec une paire de roues (30) du véhicule électrique (01), commander le module de commutation (S) pour connecter la prise centrale de l'enroulement multiphasé à l'autre extrémité de la batterie d'alimentation (20), et commander le circuit inverseur (120a) afin d'augmenter une tension aux deux extrémités du condensateur de bus (Cbus1),
**caractérisé en ce que**
dans un processus dans lequel le moteur d'entraînement (12) tourne avec la paire de roues (30), le circuit de contrôle (120b) est configuré pour, en réponse au fait que la tension de sortie de la batterie d'alimentation (20) est inférieure à la valeur de tension prédéterminée :
soit commander un transistor de commutation de branche de pont inférieur d'au moins un branche de pont de transistor de commutation à être activé à un rapport cyclique prédéterminé à chaque cycle de commutation, et commander un transistor de commutation de branche de pont supérieur de l'au moins un branche de pont de transistor de commutation à rester désactivé ;
soit commander un transistor de commutation de branche de pont supérieur et un transistor de commutation de branche de pont inférieur d'au moins un branche de pont de transistor de commutation à être activés de manière alternée.

2. Contrôleur de moteur selon la revendication 1, dans lequel le véhicule électrique (01) comprend un autre moteur d'entraînement (11), l'autre moteur d'entraînement (11) est configuré pour être en liaison de transmission avec une autre paire de roues (40) du véhicule électrique (01), et dans un processus dans lequel l'autre moteur d'entraînement (11) tourne avec l'autre paire de roues pour générer un courant induit, le circuit de contrôle (120b) est configuré pour :
en réponse au fait que la tension aux deux extrémités du condensateur de bus (Cbus1) est supérieure à une valeur de tension prédéterminée, commander le circuit inverseur (120a) pour diminuer la tension aux deux extrémités du condensateur de bus (Cbus1).

3. Contrôleur de moteur selon la revendication 2, dans lequel dans le processus dans lequel l'autre moteur d'entraînement (11) tourne avec l'autre paire de roues pour générer le courant induit, le circuit de contrôle (120b) est configuré pour :
en réponse au fait que la tension aux deux extrémités du condensateur de bus (Cbus1) est supérieure à la valeur de tension prédéterminée, commander un transistor de commutation de branche de pont supérieur d'au moins un branche de pont de transistor de commutation à être activé à un rapport cyclique prédéterminé dans chaque cycle de commutation, et commander un transistor de commutation de branche de pont inférieur de l'au moins un branche de pont de transistor de commutation à rester désactivé.

4. Contrôleur de moteur selon la revendication 2, dans lequel dans le processus dans lequel l'autre moteur d'entraînement (11) tourne avec l'autre paire de roues pour générer le courant induit, le circuit de contrôle (120b) est configuré pour :
en réponse au fait que la tension aux deux extrémités du condensateur de bus (Cbus1) est supérieure à la valeur de tension prédéterminée, commander un transistor de commutation de branche de pont supérieur et un transistor de commutation de branche de pont inférieur d'au moins un branche de pont de transistor de commutation à être activés de manière alternée.

5. Contrôleur de moteur selon l'une quelconque des revendications 1 à 4, dans lequel le circuit de contrôle (120b) est configuré pour :
en réponse au fait qu'une vitesse de rotation cible du moteur d'entraînement (12) est supérieure à une valeur de vitesse de rotation prédéterminée, commander le circuit inverseur (120a) pour augmenter la tension aux deux extrémités du condensateur de bus (Cbus1).

6. Contrôleur de moteur selon l'une quelconque des revendications 1 à 5, dans lequel le module de commutation (S) est configuré de sorte que, et le circuit de contrôle (120b) est configuré pour :
en réponse à un premier signal de couple, commander le module de commutation (S) pour connecter une extrémité de la batterie d'alimentation (20) à une extrémité de chacun d'une pluralité de branches de pont de transistor de commutation, et commander la pluralité de points médians de branche de pont du circuit inverseur (120a) pour produire un courant alternatif, pour entraîner le moteur d'entraînement (12) pour produire un couple, dans lequel une valeur de couple indiquée par le premier signal de couple est supérieure à une valeur de couple prédéterminée.

7. Contrôleur de moteur selon l'une quelconque des revendications 1 à 6, dans lequel le module de commutation (S) est configuré de sorte que, et le circuit de contrôle (120b) est configuré pour :
en réponse à un second signal de couple, commander le module de commutation (S) pour connecter une extrémité de la batterie d'alimentation (20) à une extrémité de la pluralité de branches de pont de transistor de commutation, et commander les transistors de commutation de branche de pont supérieur et les transistors de commutation de branche de pont inférieur de la pluralité de branches de pont de transistor de commutation à être désactivés, dans lequel une valeur de couple indiquée par le second signal de couple est inférieure à la valeur de couple prédéterminée.

8. Groupe motopropulseur (102) pour un véhicule électrique, dans lequel le groupe motopropulseur comprend le contrôleur de moteur (120) selon l'une quelconque des revendications 1 à 7 et un moteur d'entraînement (12), où le moteur d'entraînement (12) est un moteur à induction.

9. Véhicule électrique (01), dans lequel le véhicule électrique (01) comprend le contrôleur de moteur (120) selon l'une quelconque des revendications 1 à 7 et un contrôleur de véhicule (50), et le contrôleur de véhicule (50) est configuré pour émettre un premier signal de couple ou un second signal de couple.

10. Procédé de contrôle pour un véhicule électrique (01), dans lequel le véhicule électrique (01) comprend un contrôleur de moteur (120) selon la revendication 1 ;
et le procédé de contrôle comprend :
en réponse au fait que le moteur d'entraînement (12) tourne avec la paire de roues (30) et la tension de sortie de la batterie d'alimentation (20) étant inférieure à une valeur de tension prédéterminée, commander le module de commutation (S) pour connecter une extrémité de la batterie d'alimentation (20) à une prise centrale de l'enroulement multiphasé du moteur d'entraînement (12), et commander le circuit inverseur (120a) pour augmenter une tension aux deux extrémités du condensateur de bus (Cbus1),
**caractérisé en ce que**
dans un processus dans lequel le moteur d'entraînement (12) tourne avec la paire de roues, et en réponse au fait que la tension de sortie de la batterie d'alimentation (20) est inférieure à la valeur de tension prédéterminée,
soit commander un transistor de commutation de branche de pont inférieur d'au moins un branche de pont de transistor de commutation à être activé à un rapport cyclique prédéterminé à chaque cycle de commutation, et commander un transistor de commutation de branche de pont supérieur de l'au moins un branche de pont de transistor de commutation à rester désactivé ;
soit commander un transistor de commutation de branche de pont supérieur et un transistor de commutation de branche de pont inférieur d'au moins un branche de pont de transistor de commutation à être activés de manière alternée.

11. Procédé de contrôle selon la revendication 10, dans lequel le véhicule électrique comprend un autre moteur d'entraînement (11), l'autre moteur d'entraînement (11) est configuré pour être en liaison de transmission avec une autre paire de roues du véhicule électrique, et le procédé de contrôle comprend :
en réponse au fait que l'autre moteur d'entraînement (11) tourne avec l'autre paire de roues pour générer un courant induit et à ce qu'une tension aux deux extrémités du condensateur de bus (Cbus1) est supérieure à une valeur de tension prédéterminée, commander le module de commutation (S) pour connecter une extrémité de la batterie d'alimentation (20) à la prise centrale de l'enroulement multiphasé du moteur d'entraînement, commander un transistor de commutation de branche de pont supérieur d'au moins un branche de pont de transistor de commutation à être activé à un rapport cyclique prédéterminé dans chaque cycle de commutation, et commander un transistor de commutation de branche de pont inférieur de l'au moins un branche de pont de transistor de commutation à rester désactivé ; ou
en réponse au fait que l'autre moteur d'entraînement (11) tourne avec l'autre paire de roues pour générer un courant induit et à ce qu'une tension aux deux extrémités du condensateur de bus (Cbus1) est supérieure à une valeur de tension prédéterminée, commander le module de commutation (S) pour connecter une extrémité de la batterie d'alimentation (20) à la prise centrale de l'enroulement multiphasé du moteur d'entraînement (12), et commander un transistor de commutation de branche de pont supérieur et un transistor de commutation de branche de pont inférieur d'au moins un branche de pont de transistor de commutation à être activés de manière alternée.

12. Procédé de contrôle selon l'une quelconque des revendications 10 ou 11, comprenant en outre :
en réponse à un premier signal de couple, la commande du module de commutation (S) à connecter une extrémité de la batterie d'alimentation (20) à une extrémité de la pluralité de branches de pont de transistor de commutation, et la commande du contrôleur de moteur (120) à entraîner le moteur d'entraînement (12) pour produire un couple, dans lequel une valeur de couple indiquée par le premier signal de couple est supérieure à une valeur de couple prédéterminée.

13. Procédé de contrôle selon l'une quelconque des revendications 10 à 12, comprenant en outre :
en réponse à un second signal de couple, la commande du module de commutation (S) à connecter une extrémité de la batterie d'alimentation (20) à une extrémité de la pluralité de branches de pont de transistor de commutation, et la commande des transistors de commutation de la pluralité de branches de pont de transistor de commutation à être désactivés, dans lequel une valeur de couple indiquée par le second signal de couple est inférieure à la valeur de couple prédéterminée.
